# EUROPEAN PATENT SPECIFICATION

(11) **EP 1 925 127 B1**
(45) Date of publication and mention of the grant of the patent: **09.01.2013**
(21) Application number: 06778572.5
(22) Date of filing: 15.09.2006
(51) Int. Cl.: H04L 12/46, H04W 76/02, H04W 36/14

(54) **MAINTAINING OF CONNECTION BETWEEN TERMINAL DEVICE AND SERVICE**
AUFRECHTERHALTEN DER VERBINDUNG ZWISCHEN EINEM ENDGERÄT UND DIENST
MAINTIEN DE CONNEXION ENTRE UN DISPOSITIF TERMINAL ET UN SERVICE

(30) Priority: 16.09.2005 FI 20055495
(43) Date of publication of application: 28.05.2008
(73) Proprietor: TELIASONERA AB, 10663 Stockholm (SE)
(72) Inventor: ALA-LUUKKO, Sami, FI-00200 Helsinki (FI); KORHONEN, Jouni, FI-11100 Riihimäki (FI); KEISALA, Ilkka, FI-02710 Espoo (FI)
(74) Representative: Äkräs, Tapio Juhani
(86) International application number: PCT/FI2006/050389
(87) International publication number: WO 2007/031604

(56) References cited:
- WO-A1-2005/071998
- KR-A- 20040 051 329
- KR-A- 20040 051 329
- "Universal Mobile Telecommunications System (UMTS); Interworking between the Public Land Mobile Network (PLMN) supporting packet based services with Wireless Local Area Network (WLAN) access and Packet data Networks (PDNs) (3GPP TS 29.161 version 6.0.0 Release 6); ETSI TS 129 161", IEEE, LIS, SOPHIA ANTIPOLIS CEDEX, FRANCE, vol. 3-CN3, no. V6.0.0, 1 September 2004 (2004-09-01), XP014027828, ISSN: 0000-0001
- 'Universal Mobile Telecommunication System (UMTS); Interworking between the Public Land Mobile Network (PLMN) supporting packet based services with Wireless Local Area Network (WLAN) access and Packet Data Networks (PDNs); Technical Specification: ETSI.....' ETSI STANDARDS vol. 600, September 2004, pages 1 - 19, XP014027828

## Description

### BACKGROUND OF THE INVENTION

The invention relates to maintaining a connection between a terminal device and a service in a situation where the access method used by the terminal device changes.

Continuously developing communications services and increasing numbers of access methods available for wireless terminal devices to communicate with access networks have led to the design of devices known as multi-access terminals, which are capable of using two or more access methods. An example of a multi-access terminal is a terminal device provided with the capability to communicate both with a 2^{nd} generation mobile communications network and a WLAN (Wireless Local Area Network).

A problem associated with these multi-access terminals and their use is how to make sure that connections and/or services are provided uninterruptedly in a situation where the access method changes. A terminal may use a particular service through for example a GPRS (General Packet Radio Service) connection established via a mobile communications network, but as the terminal moves there may arise a need to start using the service through WLAN, for example, or another access network. This kind of transition of a connection or connections between different network or access technologies is known as vertical handover. It is advantageously carried out so that the connection to the service is maintained and the user of the terminal does not have to re-activate for example the device or an application located therein and providing a service. It is to be noted that in this context maintaining a connection does not necessarily mean a completely uninterrupted connection to a service, but the handover may cause an interruption in the connection. However, depending on the application and the service in question, such an interruption is not necessarily significant.

This functionality for handing over a connection set up to a specific service from one access method to another can be implemented using Mobile IP (Internet Protocol), for example. However, a solution such as this does not necessarily allow the same service to be contacted again. Another disadvantage is that Mobile IP and the like require that the access network support the procedure. Further, the use of Mobile IP, or the like, typically requires significant changes to the terminal device.
A method according to the prior art is disclosed in KR 2004 005 1329

Another alternative is to use different client-server solutions in which the connection to the service is set up through a proxy, irrespective of the access method used by the terminal device. This solution also requires significant changes to the access network.

### BRIEF DESCRIPTION OF THE INVENTION

It is therefore an object of the invention to provide a method and an apparatus implementing the method which allow the above problems to be solved or at least alleviated. The object of the invention is achieved by a method, terminal device, computer program product for controlling the terminal, and computer-readable memory device, characterized by what is stated in independent claims 1, 5, 10, 11. The preferred embodiments of the invention are disclosed in the dependent claims.

The basic idea of the invention is that when a connection is to be established between a terminal device and a service to be used, it is always set up using one and the same APN (Access Point Name) associated with the service.

An advantage of the method and arrangement of the invention is that they enable a connection to be set up and maintained to one and the same service irrespective of the access method or access network used. In addition, the invention does not necessarily require more than just minor changes to the terminal device.

### BRIEF DESCRIPTION OF THE FIGURES

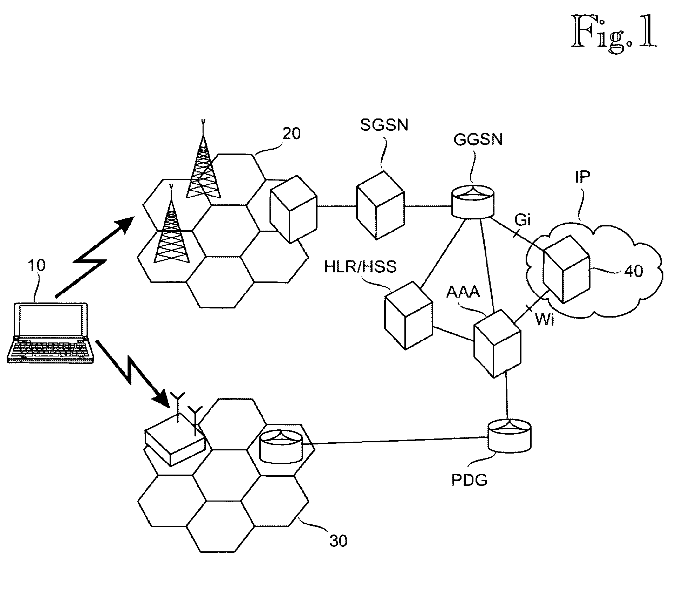

In the following the invention will be described in greater detail with reference to the preferred embodiments and the accompanying drawing, in which
Figure 1 is a simplified block diagram of a telecommunications system in which the invention can be applied.

### DETAILED DESCRIPTION OF THE INVENTION

The invention can be applied in different telecommunications systems, which comprise 2^{nd} and 3^{rd} generation mobile communications systems, such as GSM and UMTS (Universal Mobile Communications System) and WLAN and WiMAX. Further, the invention can be used in connection with UMA (Unlicensed Mobile Access) and GAN (Generic Access Network) technologies. In the following the invention is described by way of example with reference to a 3GPP Release 6 network architecture, defined by the 3GPP (3^{rd} Generation Partnership project), although the invention is not restricted thereto. Recommendations relating to mobile communications systems and to third generation mobile communications systems in particular are rapidly advancing; for this reason additional changes to the invention may be required. All words and expressions used herein are only meant to illustrate the invention and not to restrict it and should therefore be interpreted in their broadest sense.

Figure 1 illustrates an example of a network architecture in which the invention can be applied. It is to be noted that for the sake of clarity the Figure only shows components essential for understanding the invention. The system of Figure 1 comprises a first access network 20 that offers a wireless connection to terminal devices 10. A terminal device 10 is any device, such as a mobile station or a PDA device, which is capable of utilizing two or more access procedures. In this example the access network 20 is a 2G/3G mobile communications network. The access network 20 is further connected to a packet-switched GPRS network comprising a serving GPRS (General Packet Radio Service) support node SGSN and a Gateway GPRS Support Node GGSN, a Home Location Register/Home Subscriber Server HLR/HSS and an AAA Server (Authentication, Authorisation and Accounting). Support nodes SGSN and GGSN are typically interconnected through a core network, such as an IP/ATM (Internet Protocol/Asynchronous Transfer Mode) network. The support nodes SGSN and GGSN may belong to a network having one and the same operator, or the packet-switched access network shown in the Figure may consist of sub-networks of different operators and therefore, when the terminal device 10 is roaming in the network of another operator, the SGSN is located in the visited network whereas the GGSN is in the home location network of the terminal device UE. When SGSN and GGSN are located in networks of different operators, there may be other network elements between them; however, for the sake of clarity such elements are not shown in the Figure.

The serving GPRS support node SGSN is a node serving a terminal device 10 located within its area. In a cellular packet radio network each support node SGSN provides the terminal devices 10 with a packet data service within one or more cells in its service area. The Gateway GPRS Support Node GGSN links the operator's GPRS network to external Packet-Switched Data Networks PSDN, such as IP networks, over IP interface Gi. In this connection the term 'packet-switched data network' should be understood in its broadest sense to refer to an Internet, intranet, WAP or multimedia IP system, for example, or to a specific server element, or the like, directly connected to the gateway support node. GGSN serves as a router between an external address and internal routing data (e.g. SGSN). It is to be noted that the functionalities of SGSN and GGSN may be physically integrated into the same node, although logically the nodes are separate. Packet-switched access networks of some other type may comprise other network elements. The home location register/home subscriber server HLR/HSS is a register in which the subscriber information of each subscriber is stored permanently or semi-permanently by linking the subscriber information to the subscriber identity, which in the GSM system, for example, is IMSI.

The GPRS interface of the packet-switched access network provides the terminal device 10 with one or more individual Packet Data Protocol or PDP contexts that describe the packet data address available to the terminal device 10 for sending and receiving data packets when the PDP context is active. In other words, the PDP context may be seen as a connection. The PDP context determines different data transfer parameters, such as PDP type (e.g. X.25 or IP), PDP address (e.g. IP address), QoS (Quality of Service), APN (Access Point Name) and NSAPI (Network Service Access Point Identifier). APN in particular is a logical name having the form of an Internet domain name and describing, as prescribed in the Domain Name and Addressing System DNS, the actual access point; in the GPRS system, for example, APN refers to a gateway GPRS support node GGSN to be used and to a related external data network. APN indicates the name of the GGSN node to be used to the serving GPRS support node SGSN, whereas to the gateway support node GGSN APN indicates the external network to which the connection is to be established. APN can name a specific service directly. Figure 1 shows, by way of example, a server 40 located in a network IP and providing a specific service to the terminal device 10. APN consists of two parts: an APN network identifier and an APN operator identifier. The APN network identifier is compulsory and identifies the external network to which a connection is to be established. The APN operator identifier is optional and indicates a network to be used in connection with network roaming. When a PDP context is being activated, the terminal device 10 may inform the desired APN name to the support node SGSN, which uses the DNS system to interpret the name and the actual access point associated with it, and initiates the forming of the PDP context together with the selected access point (GGSN).

The system of Figure 1 further comprises a second access network 30, which in this example is a WLAN network and also provides the terminal device 10 with a wireless connection. In the example of Figure 1 the WLAN access network 30 preferably follows the WLAN 3GPP IP Access functionality defined by 3GPP. This means that the terminal device 10 is capable of setting up an IKEv2 (Internet Key Exchange) IPSec (IP Security Protocol) tunnel between the terminal device 10 and a Packet Data Gateway (PDG) of the operator. PDG is selected and found using a W-APN (Wireless APN) name, which is the WLAN equivalent for APN used in GPRS. In other words, W-APN is a logical name having the form of an Internet domain name and describes, as prescribed in the DNS agreements, the actual access point, i.e. provides a reference to the PDG to be used and to an associated external data network, and it can name a specific service directly. When the tunnel has been set up all the traffic of the terminal device 10 is routed inside the IPSec tunnel over an interface Wi through PDG to an external network IP indicated by the W-APN, similarly as described above in connection with GPRS. In Figure 1 the WLAN system is connected to the first access network and to the related GPRS network through an AAA server. Co-operation between a mobile communications service supporting packet services and a WLAN network is standardized in the 3GPP recommendations, specifically in recommendation 3GPP TS 29.161 v.6.0.0.

According to the invention, when a service 40 is to be used, a first connection is set up between the terminal device 10 and the service 40 by using the first access method and on the basis of the APN name corresponding to the service. Further according to the invention, a second connection for using the service 40 is set up between the terminal device 10 and the service 40 by using the second access method and on the basis of a corresponding APN name, which is the same as the APN name used for setting up the first connection. According to the invention the service is preferably always found on the basis of its (W-)APN name, which is the same irrespective of the access method or access network. In a 2G/3G network, for example, the GGSN Gi interface needed for using the service 40 is found. In a 3GPP I-WLAN network the service is found and a connection to the service is set up by using the W-APN name which finds the required PDG Wi interface to the service 40. From the point of view of the service, interfaces Gi and Wi are both identical IP connections. For example, in connection with a handover or depending on the access networks available, the terminal device 10 preferably either activates a 2G/3G PDP context using the APN name or a WLAN end-to-end IPSec tunnel by using a W-APN name, which is the same as the APN name used in the 2G/3G network. In both cases the same service is accessed.

According to an embodiment of the invention the second connection is set up between the terminal device and the service when the first connection is cut off. If one of the network connections disappears, the terminal device 10 preferably re-activates APN by means of the second access method. According to an embodiment of the invention the second connection between the terminal device 10 and the service 40 is set up before the first connection is cut off. In other words, it is also possible that the handover takes place as what is known as a seamless handover, which means that for a while the APNs are both active at the same time. However, this is only possible if the access network and the terminal device allow two or more connections to be maintained at the same time, i.e. they support a procedure known as simultaneous multi-access.

According to an embodiment of the invention, when the second connection is being set up, the terminal device 10 is given the same IP address it had when the first connection was in use. When a PDP context or a WLAN tunnel is activated on the basis of a (W-)APN name, the system provides the connection with an IP address. IP addresses may be assigned in a coordinated manner or one by one. When coordinated address assignment is used, GGSN asks in connection with the creating of the PDP context an external RADIUS (Remote Authentication Dial-In User Server; not shown in the Figure), for example, for the address. It is also possible that when the WLAN tunnel is being set up, PDG retrieves the IP address from the same server (an internal address of the tunnel for the terminal device). Consequently, although the access method changes the same IP address may be allocated after handover, whereby it may even be possible to achieve IP session continuity. If address management has not been coordinated for example as described above, different connections are probably given different IP addresses and therefore IP session continuity is not possible (because TPC connections, for example, are cut off), but connection to the same service can still be maintained and the service is provided.

The above functionality of the invention can be implemented in the terminal device 10 using what is called client software, for example, or some other suitable software, or by means of separate components, such as microcircuits. If software is used for implementing the functionality of the invention, the software can be delivered to the terminal device in the form of a detachable memory device, such as a flash memory, or via access network 20 or 30. However, this is not relevant as regards the basic idea of the invention. The invention does not necessarily require any changes in the access networks used or in elements and systems associated with them. For example, in a 3GPP Release 6 Interworking WLAN architecture the invention can be implemented using existing mechanisms.

A person skilled in the art will find it obvious that as technology advances, the basic idea of the invention can be implemented in various ways. The invention and its embodiments are therefore not restricted to the above examples, but may vary within the scope of the claims.

## Claims

1. A method for maintaining a connection between a terminal device and a service (40) in a situation where the access method used by the terminal (10) device (10) changes, the method comprising the steps of
setting up a first connection between the terminal device (10) and the service (40) by using a GPRS access method and on the basis of an APN, Access Point Name, corresponding to the service (40) and comprising a reference to a Gateway GPRS Support Node via which the connection to the service is to be set up to allow the service to be used, and
setting up a second connection between the terminal device (10) and the service (40) by using a WLAN access method to allow the service to be used,
**characterized in that**
the second connection is set up on the basis of a W-APN, Wireless Access Point Name, corresponding to the service (40) and comprising a reference to a Packet Data Gateway via which the connection to the service is to be set up, the W-APN being the same as the APN used for setting up the first connection.

2. A method according to claim 1, **characterized in that** the second connection between the terminal device and the service is set up before the first connection is cut off.

3. A method according to claim 1, **characterized in that** the second connection between the terminal device and the service is set up when the first connection is cut off.

4. A method according to any one of claims 1 to 3, **characterized in that** in connection with the setting up of the second connection the terminal device is given the same IP (Internet Protocol) address it had when using the first connection.

5. A terminal device (10) capable of using two or more access methods for setting up a connection between the terminal device (10) and a service (40), the terminal device (10) being configured to
set up a first connection to the service (40) by using a GPRS access method and on the basis of an APN, Access Point Name, corresponding to the service and comprising a reference to a Gateway GPRS Support Node via which the connection to the service is to be set up, and
set up a second connection to the service (40) by using a WLAN access method, **characterized in that** the terminal device (10) is further configured to
set up the second connection to the service (40) on the basis of a W-APN, Wireless Access Point Name, corresponding to the service and comprising a reference to a Packet Data Gateway via which the connection to the service is to be set up, the W-APN being the same as the APN used for setting up the first connection.

6. A terminal device according to claim 5, **characterized in that** the terminal device (10) is configured to set up the second connection to the service before the first connection is cut off.

7. A terminal device according to claim 5, **characterized in that** the terminal device (10) is configured to set up the second connection to the service when the first connection is cut off.

8. A terminal device according to any one of claims 5 to 7, **characterized in that** the terminal device (10) is a wireless terminal.

9. A terminal device according to claim 8, **characterized in that** the terminal device (10) is a mobile station.

10. A computer program product for controlling a terminal device (10) the computer program product comprising a computer program code the execution of which in the terminal (10) causes the terminal (10) to carry out any one of the methods of claims 1 to 4.

11. A computer-readable memory device comprising a computer program the execution of which in a computer causes the computer to carry out any one of the methods of claims 1 to 4.

## Patentansprüche

1. Verfahren zum Aufrechterhalten einer Verbindung zwischen einer Endeinrichtung (10) und einem Service (40) in einer Situation, in welcher sich das Zugriffsverfahren, das von der Endeinrichtung (10) verwendet wird, ändert, wobei das Verfahren die folgenden Schritte umfasst:
Aufbauen einer ersten Verbindung zwischen der Endeinrichtung (10) und dem Service (40), indem ein GPRS-Zugriffsverfahren verwendet wird und auf Basis eines APN, Zugriffspunktname, entsprechend dem Service (40), und umfassend eine Referenz zu einem Gateway-GPRS-Supportknoten, über welchen die Verbindung mit dem Service aufgebaut werden soll, damit der Service benutzt werden kann und
Aufbauen einer zweiten Verbindung zwischen der Endeinrichtung (10) und dem Service (40) durch Verwenden einer WLAN-Zugriffsmethode, damit der Service verwendet werden kann,
**dadurch gekennzeichnet, dass**
die zweite Verbindung auf der Basis eines W-APN, drahtloser Zugriffspunktname, entsprechend dem Service (40) aufgebaut wird und eine Referenz zu einem Gateway gepackter Daten umfasst, über welches die Verbindung zu dem Service aufgebaut werden soll, wobei der W-APN der Gleiche ist, wie der APN, der zum Aufbau der ersten Verbindung verwendet wurde.

2. Verfahren gemäß Anspruch 1, **dadurch gekennzeichnet, dass** die zweite Verbindung zwischen der Endeinrichtung und dem Service aufgebaut wird, bevor die erste Verbindung abgeschaltet wird.

3. Verfahren gemäß Anspruch 1, **dadurch gekennzeichnet, dass** die zweite Verbindung zwischen der Endeinrichtung und dem Service aufgebaut wird, wenn die erste Verbindung abgeschaltet wird.

4. Verfahren gemäß einem jeden der Ansprüche 1 bis 3, **dadurch gekennzeichnet, dass** in Verbindung mit dem Aufbau der zweiten Verbindung, der Endeinrichtung dieselbe IP (Internet Protokoll)-Adresse zugewiesen wird, die sie hatte, wenn die erste Verbindung verwendet wurde.

5. Endeinrichtung (10), welche zwei oder mehr Zugriffsverfahren zum Aufbauen einer Verbindung zwischen der Endeinrichtung (10) und einem Service (40) verwenden kann, wobei die Endeinrichtung (10) zum
Aufbauen einer ersten Verbindung mit dem Service (40) unter Verwendung eines GPRS-Zugriffsverfahrens und auf Basis eines APN, Zugriffspunktname, entsprechend dem Service und umfassend eine Referenz zu einem Gateway-GPRS-Supportknoten, über welchen die Verbindung zu dem Service aufgebaut werden soll und
Aufbauen einer zweiten Verbindung mit dem Service (40), unter Verwendung einer WLAN-Zugriffsmethode ausgestattet ist,
**dadurch gekennzeichnet, dass**
die Endeinrichtung (10) des Weiteren dazu ausgestattet ist,
eine zweite Verbindung zu dem Service (40) auf Basis eines W-APN, drahtloser Zugriffspunktname, entsprechend dem Service aufzubauen und eine Referenz zu einem Gateway gepackter Daten umfasst, über welches die Verbindung zu dem Service aufgebaut werden soll, wobei der W-APN derselbe ist, wie der APN, der zum Aufbau der ersten Verbindung verwendet wurde.

6. Endeinrichtung gemäß Anspruch 5, **dadurch gekennzeichnet, dass** die Endeinrichtung (10) dazu ausgerüstet ist, die zweite Verbindung mit dem Service aufzubauen, bevor die erste Verbindung abgeschaltet ist.

7. Endeinrichtung gemäß Anspruch 5, **dadurch gekennzeichnet, dass** die Endeinrichtung (10) dazu ausgerüstet ist, die zweite Verbindung zu dem Service aufzubauen, wenn die erste Verbindung abgeschaltet ist.

8. Endeinrichtung gemäß einem jeden der Ansprüche 5 bis 7, **dadurch gekennzeichnet, dass** die Endeinrichtung ein drahtloses Endgerät ist.

9. Endeinrichtung gemäß Anspruch 8, **dadurch gekennzeichnet, dass** die Endeinrichtung (10) eine mobile Station ist.

10. Computer-Programm zur Steuerung einer Endeinrichtung (10), wobei das Computerprogramm einen Computerprogrammcode umfasst, dessen Ausführung in der Endeinrichtung (10), die Endeinrichtung (10) zur Ausführung eines jeden Verfahrens gemäß den Ansprüchen 1 bis 4 verursacht.

11. Computerlesbares Speichergerät, umfassend ein Computerprogramm, dessen Ausführung in dem Computer, den Computer zur Ausführung eines jeden der Verfahren gemäß den Ansprüchen 1 bis 4 verursacht.

## Revendications

1. Procédé pour maintenir une connexion entre un dispositif terminal (10) et un service (40) dans une situation où la méthode d'accès utilisée par le dispositif terminal (10) change, le procédé comprenant les étapes consistant à :
établir une première connexion entre le dispositif de terminal (10) et le service (40) en utilisant une méthode d'accès GPRS et sur la base d'un APN, nom du point d'accès, correspondant au service (40) et comprenant une référence à un noeud de support GPRS de passerelle via lequel la connexion au service doit être établie pour permettre une utilisation du service, et
établir une seconde connexion entre le dispositif de terminal (10) et le service (40) en utilisant une méthode d'accès WLAN pour permettre une utilisation du service, **caractérisé en ce que**
la seconde connexion est établie sur la base d'un W-APN, nom du point d'accès sans fil, correspondant au service (40) et comprenant une référence à une passerelle de données de paquet via laquelle la connexion au service doit être établie, le W-APN étant le même que le W-APN utilisé pour établir la première connexion.

2. Procédé selon la revendication 1, **caractérisé en ce que** la seconde connexion entre le dispositif terminal et le service est établie avant que la première connexion soit interrompue.

3. Procédé selon la revendication 1, **caractérisé en ce que** la seconde connexion entre le dispositif terminal et le service est établie lorsque la première connexion est interrompue.

4. Procédé selon l'une quelconque des revendications 1 à 3, **caractérisé en ce qu'**en rapport avec l'établissement de la seconde connexion, le dispositif terminal se voit attribuer la même adresse IP (Protocole Internet) qu'il avait lorsqu'il utilisait la première connexion.

5. Dispositif terminal (10) capable d'utiliser deux méthodes d'accès ou plus pour établir une connexion entre le dispositif de terminal (10) et un service (40), le dispositif terminal (10) étant configuré pour
établir une première connexion au service (40) en utilisant une méthode d'accès GPRS et sur la base d'un APN, nom de point d'accès, correspondant au service et comprenant une référence à un noeud de support GPRS de passerelle via lequel la connexion au service doit être établie, et
établir une seconde connexion au service (40) en utilisant une méthode d'accès WLAN, **caractérisé en ce que** le dispositif terminal (10) est en outre configuré pour
établir la seconde connexion au service (40) sur la base d'un W-APN, nom de point d'accès sans fil, correspondant au service et comprenant une référence à une passerelle de données de paquets via laquelle la connexion au service doit être établie, le W-APN étant le même que l'APN utilisé pour établir la première connexion.

6. Dispositif de terminal selon la revendication 5, **caractérisé en ce que** le dispositif terminal (10) est configuré pour établir la seconde connexion au service avant que la première connexion soit interrompue.

7. Dispositif de terminal selon la revendication 5, **caractérisé en ce que** le dispositif terminal (10) est configuré pour établir la seconde connexion au service lorsque la première connexion est interrompue.

8. Dispositif de terminal selon l'une quelconque des revendications 5 à 7, **caractérisé en ce que** le dispositif de terminal (10) est un terminal sans fil.

9. Dispositif de terminal selon la revendication 8, **caractérisé en ce que** le dispositif terminal (10) est une station mobile.

10. Produit de programme informatique pour commander un dispositif terminal (10), le produit de programme informatique comprenant un code de programme informatique dont l'exécution dans le terminal (10) amène le terminal (10) à réaliser l'un quelconque des procédés des revendications 1 à 4.

11. Dispositif de mémoire lisible par ordinateur comprenant un programme informatique dont l'exécution dans un ordinateur amène l'ordinateur à réaliser l'un des procédés des revendications 1 à 4.
